# EUROPEAN PATENT APPLICATION

(11) **EP 1 128 456 A2**
(43) Date of publication of application: **29.08.2001**
(21) Application number: 00125808.6
(22) Date of filing: 24.11.2000
(51) Int. Cl.: H01M 8/04

(54) **Method and apparatus for preventing cell reversal in a fuel cell stack**

(30) Priority: 22.02.2000 US 510598
(71) Applicant: General Motors Corporation, Detroit, Michigan 48265-3000 (US)
(72) Inventor: Clingerman, Bruce J., Palmyra, New York 14522 (US)
(74) Representative: Manitz, Finsterwald & Partner

(57) **Abstract**

A diagnostic method and apparatus for detecting cell reversal in a fuel cell stack. The inventive method and apparatus determines the average cell or cluster voltage change of all of the cells or clusters in the stack over a time period and the individual cell or cluster voltage change during the same time period and generates a difference between the average cell or cluster voltage change and the individual cell or cluster voltage change which is compared with a reference acceptable difference. The method and apparatus generate an output indicating impending cell reversal if the voltage of an individual cell or cluster changes significantly more or less than the average voltage change of the rest of the cells or clusters in the stack.

## Description

### Government Support

The Government of the United States of America has right in this invention pursuant to Agreement No. DE-AC02-90CH10435 awarded by the U.S. Department of Energy.

### Field of the Invention

This invention relates to a fuel cell system and, more particularly, to a system having a plurality of cells which consume an H₂-rich gas to produce power.

### Background of the Invention

Fuel cells have been used as a power source in many applications. For example, fuel cells have been proposed for use in electrical vehicular power plants to replace internal combustion engines. In proton exchange membrane (PEM) type fuel cells, hydrogen is supplied to the anode of the fuel cell and oxygen is supplied as the oxidant to the cathode. PEM fuel cells include a membrane electrode assembly (MEA) comprising a thin, proton transmissive, non-electrically conductive solid polymer electrolyte membrane having the anode catalyst on one of its faces and the cathode catalyst on the opposite face. The MEA is sandwiched between a pair of electrically conductive elements which (1) serve as current collectors for the anode and cathode, and (2) contain appropriate channels and/or openings therein for distributing the fuel cells gaseous reactants over the surfaces of the respective anode and cathode catalysts. Membrane and catalysts promote protons to pass through the membrane to the oxygen side. When the proton passes through the membrane, the remaining electron leaves a negative charge on the anode or hydrogen side of the membrane. With the addition of the proton, the oxygen side or cathode maintains a positive charge. By wiring an electrical load between the two sides, electricity flows creating work. The hydrogen and oxygen combined on the cathode side to form H₂O.

The term "fuel cell" is typically used to refer to either a single cell or a plurality of cells (stack) depending on the context. A plurality of individual cells are commonly bundled together to form a fuel cell stack and are commonly arranged in series. Each cell within the stack comprises the membrane electrode assembly (MEA) described earlier, and each such MEA provides its increment of voltage. A group of adjacent cells within the stack is referred to as a cluster. Typical arrangements of multiple cells in a stack are described in U.S. Patent No. 5,763,113, assigned to General Motors Corporation. Each cell in a fuel stack typically generates only about 1.0 volts. This drops to about 0.7 volts (depending upon the current) under load. Thus, in order to produce a meaningful voltage sufficient to operate a motor vehicle, several hundred cells have to be "stacked" up in series. The resulting amperage is then large enough to power an automobile.

In PEM fuel cells, hydrogen (H₂) is the anode reactant (i.e., fuel) and oxygen is the cathode reactant (i.e., oxidant). The oxygen can be either a pure form (O₂), or air (a mixture of O₂ and N₂). The solid polymer electrolytes are typically made from ion exchange resins such as perfluoronated sulfonic acid. The anode/cathode typically comprises finely divided catalytic particles, which are often supported on carbon particles, and mixed with a proton conductive resin. The catalytic particles are typically costly precious metal particles. These membrane electrode assemblies are relatively expensive to manufacture and require certain conditions, including proper water management and humidification, and control of catalyst fouling constituents such as carbon monoxide (CO), for effective operation.

For vehicular applications, it is desirable to use a liquid fuel such as an alcohol (e.g., methanol or ethanol), or hydrocarbons (e.g., gasoline) as the source of hydrogen for the fuel cell. Such liquid fuels for the vehicle are easy to store onboard and there is a nationwide infrastructure for supplying liquid fuels. However, such fuels must be dissociated to release the hydrogen content thereof for fueling the fuel cell. The dissociation reaction is accomplished within a chemical fuel processor or reformer. The fuel processor contains one or more reactors wherein the fuel reacts with steam and sometimes air, to yield a reformate gas comprising primarily hydrogen and carbon dioxide. For example, in the steam methanol reformation process, methanol and water (as steam) are ideally reacted to generate hydrogen and carbon dioxide. In reality, carbon monoxide and water are also produced. In a gasoline reformation process, steam, air and gasoline are reacted in a fuel processor which contains two sections. One is primarily a partial oxidation reactor (POX) and the other is primarily a steam reformer (SR). The fuel processor produces hydrogen, carbon dioxide, carbon monoxide and water. Downstream reactors such as a water/gas shift (WGS) and preferential oxidizer (PROX) reactors are used to produce carbon dioxide (CO₂) from carbon monoxide (CO) using oxygen from air as an oxidant. Here, control of air feed is important to selectively oxidize CO to CO₂.

Fuel cell systems which process a hydrocarbon fuel to produce a hydrogen-rich reformate for consumption by PEM fuel cells are known and are described in copending United States Patent Application Serial Nos. 08/975,422 and 08/980,087, filed in November, 1997, and U.S. Serial No. 09/187,125, filed in November, 1998, and each assigned to General Motors Corporation, assignee of the present invention; and in International Application Publication Number WO 98/08771, published March 5, 1998. A typical PEM fuel cell and its membrane electrode assembly (MEA) are described in United States Patent Nos. 5,272,017 and 5,316,871, issued respectively December 21, 1993 and May 31, 1994, and assigned to General Motors Corporation.

Efficient operation of a fuel cell system depends on the ability to effectively control good gas flow through the fuel cell. When applying a load to the stack, each cell must have an adequate supply of hydrogen and oxygen. Failure to get sufficient gas flow to a cell may cause a condition known as "cell reversal". This condition may adversely affect the individual cell as well as the integrity of the entire stack.

It has been found that very low cell voltage indicates the start of cell reversal. Ultimately, the cell even reverses electrical polarity such that instead of having a cathode 0.7 volts higher than the anode voltage, the cell has an anode potential of about 1.6 volts higher than that of the cathode. The cell now acts as a voltage sink instead of a voltage supply. This generates heat and reduces the overall stack voltage instead of increasing it.

Although it is possible to measure the overall voltage of a fuel cell stack, this does not indicate the existence of one problem cell within the stack. In other words, a small voltage drop occurring in a number of cells would not be able to be distinguished from a large voltage drop in one weak or problem cell. This is evident by an example where the fuel cell stack might have, for example, 200 cells, each at 0.7 to 0.8 volts at a given load. In a circumstance where three cells drop from 0.75 to 0.0 volts, the overall fuel cell stack voltage changes from 150 volts to 147.75 volts. This latter value is well above the expected voltage if all the cells were at 0.7 volts, that is, at the lower range indicating a stack voltage of 140 volts which is nominally acceptable.

The physical manufacturing of the fuel cells introduces minor differences in each cell causing some cells to always perform much better than others, especially with moderately high CO levels in the reformate. A weak performing cell may have a considerably lower voltage than other cells in the stack, but may still maintain its voltage without cell reversal.

While it would be advantageous to monitor the voltage of each cell in a stack, from an economic viewpoint, this is not strictly necessary or desirable. Since a typical fuel cell stack, sized for use in automotive power and voltage ranges, contains approximately 150 to 200 cells, the logistic of reading all of the 150 to 200 cell voltages can become a significant task with respect to hardware connections. Also, due to the sheer size of the data being processed from each of the 150 to 200 cells, it is important to design efficient software to collect and process all of the cell voltage information.

Thus, a prior approach relies on monitoring groups of cells, referred to as "clusters" instead of each individual cell. Care must be taken not to group too many cells together in a cluster since the total contribution of the output of each cell to the chosen cluster output must be large enough so that an individual poor performing cell can be resolved from the condition where the cells in the cluster are on the low side of nominal performance. This resolution limitation usually results in either three or four cells being grouped together in a cluster.

However, the typical approach with clusters in monitoring cell operating conditions is to compare each cluster with the other clusters in the stack to detect a poor performing cluster which may be indicative of an impending or actual cell reversal in one of the cells of the poor performing cluster. The voltage of each cluster may also be compared with a calibration voltage and a signal indicating remedial action generated when a monitored voltage of a particular cluster is'less than the preselected calibration voltage.

However, since each cell and cluster of cells cannot be manufactured identically, the performance of one cell or a cluster of cells may vary considerably from those of other cells or clusters of cells in a fuel cell stack. Thus, a low voltage condition on a particular cell or cluster of cells in a fuel cell stack is relative only to that particular cell or cluster and not to other cells or clusters in the fuel cell stack which may have different, but still nominal operating performance.

Thus, it would be desirable to provide a method and apparatus for detecting the onset of cell reversal in a fuel cell stack as early as possible. It would also be desirable to provide a method and apparatus for detecting the onset of cell reversal which forces remedial action to prevent adverse effects to the integrity of the fuel cell stack. It would also be desirable to provide a method and apparatus for detecting the onset of cell reversal in a fuel cell stack which compares each cell or cluster to itself rather than to other cells or clusters in a particular stack.

### Summary of the Invention

The present invention is a diagnostic method and apparatus for detecting fuel reversal in a fuel cell.

The inventive method comprises the steps of:
(a) determining the average cell or cluster voltage change of all of the cells or clusters in the fuel cell stack over a predetermined time period;
(b) determining the voltage change of one cell or cluster over the same predetermined time period;
(c) determining the difference between (a) and (b); and
(d) comparing the difference in step (c) with a reference difference and generating an output indicating cell reversal if the determined difference exceeds the reference difference.

In one aspect of invention, the average cell or cluster voltage is determined by the steps of:
sampling the stack voltage at t=n and t=n+1 times;
determining the difference between the stack voltage at time t=n and time t=n+1, where 1 is a time increment; and
dividing the determined difference by the total number of cells in stack.

Steps (a-d) of the inventive method are performed for each successive cell or cluster in the stack and, at each time, the stack voltage change over the same time period is determined.

A significantly large difference between the voltage change of one individual cell or cluster over the predetermined time period compared with the average voltage change of all of the cells or clusters in the stack over the same time period may be indicative of an impending cell reversal.

In another aspect of the invention, an apparatus is disclosed for detecting impending cell reversal in a fuel cell stack including a plurality of cells. The apparatus includes means for determining the average cell voltage change of all of the cells in the stack over a predetermined time period. Means are provided for measuring the voltage change of one cell in the stack over the predetermined time period. Means are also provided for determining the difference between the average voltage change of the cells in the stack and the voltage change of one cell over the same predetermined time period. Finally, means are provided for comparing the determined difference with a reference acceptable difference and generating an output if the determined difference exceeds the reference difference.

The means for determining the average cell voltage change of all of the cells in the stack includes means for measuring the stack voltage at the beginning and end times of the predetermined time period, means for determining the difference between the stack voltage at the start of the time period and the stack voltage at the end time of the time period, and means for dividing the determined difference by the total number of cells in the stack.

The inventive method and apparatus generates an output upon sensing the significant difference between the voltage change in one cell or cluster of a fuel cell stack and the average voltage change of all of the cells or clusters in the stack to enable remedial action to be immediately taken to protect the integrity of the fuel cell stack due to impending cell reversal in any cell of the stack.

### Brief Description of the Drawing

The various features, advantages and other uses of the present invention will become more apparent by referring to the following description and drawing in which:
Fig. 1 is a flow diagram depicting a fuel cell system which can utilize the method and apparatus for preventing cell reversal according to the present invention;
Fig. 2 is a schematic drawing of the fuel cell system shown in Fig. 1 connected in a pictorial representation of a use application;
Fig. 3 is a pictorial schematic diagram showing cells of a fuel cell stack arranged in clusters with connections for voltage monitoring according to the present invention;
Fig. 4 is a flow/control diagram of the sequence of operation of the method and apparatus of the present invention in detecting the onset of cell reversal in a fuel cell stack; and
Fig. 5 is a flow diagram depicting the sequence steps according to the method and apparatus of the present invention.

### Description of the Preferred Embodiment

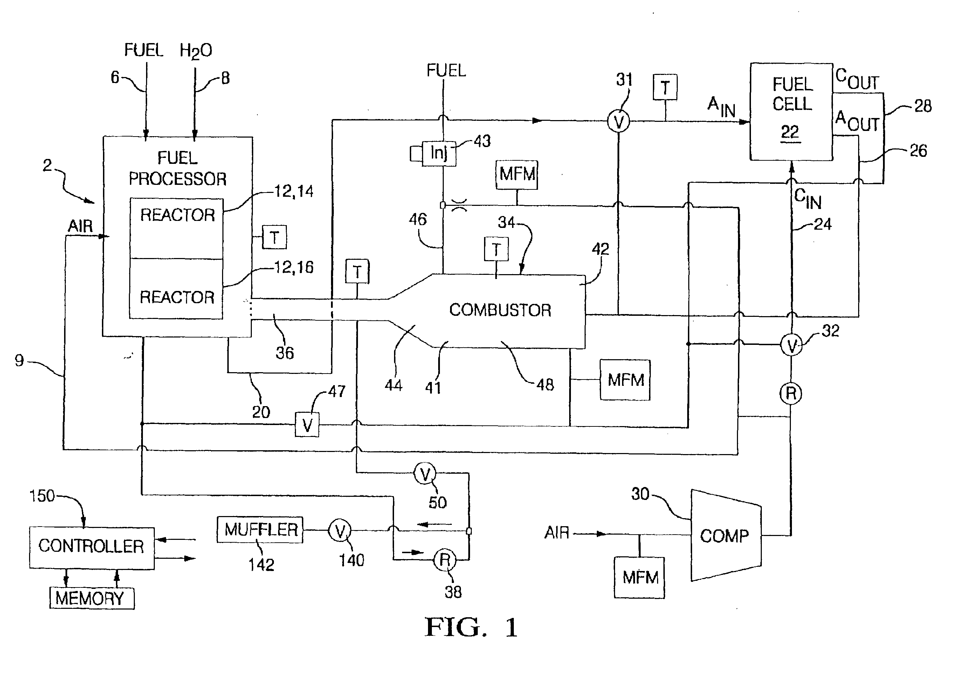

The present method and apparatus may be further understood with reference to the fuel cell system shown in Fig. 1 by example only. Therefore, before further describing the invention, it is useful to understand the system within which the present method and apparatus of detecting the onset of fuel cell reversal is employed.

Fig. 1 illustrates an example of a fuel cell system. The system may be used in a vehicle (not shown) as an energy source for vehicle propulsion. In the system, a hydrocarbon is processed in a fuel processor, for example, by reformation and preferential oxidation processes, to produce a reformate gas which has a relatively high hydrogen content on a volume or molar basis. Therefore, reference is made to hydrogen-rich or relatively high hydrogen content.

The invention is hereafter described in the context of a fuel cell fueled by an H₂-rich reformate regardless of the method by which such reformate is made. It is to be understood that the principles embodied herein are applicable to fuel cells fueled by H₂ obtained from any source, including reformable hydrocarbon and hydrogen-containing fuels such as methanol, ethanol, gasoline, alkene, or other aliphatic or aromatic hydrocarbons.

As shown in Fig. 1, a fuel cell apparatus includes a fuel processor 2 for catalytically reacting a reformable hydrocarbon fuel stream 6, and water in the form of steam from a water stream 8. In some fuel processors, air is also used in a combination preferential oxidation/steam reforming reaction. In this case, fuel processor 2 also receives an air stream 9. The fuel processor contains one or more reactors 12 wherein the reformable hydrocarbon fuel in stream 6 undergoes dissociation in the presence of water/steam 8 and sometimes air (in stream 9) to produce the hydrogen-rich reformate. Further, each reactor 12 may comprise one or more reactor beds. Reactor 12 may have one or more sections or beds, and a variety of designs are known and usable. Therefore, the selection and arrangement of reactors 12 may vary; and exemplary fuel reformation reactor(s) 14 and downstream reactor(s) 16 are described immediately below.

By way of example, in an exemplary steam/methanol reformation process, methanol and water (as steam) are ideally reacted in a reactor 14 to generate hydrogen and carbon monoxide as described earlier in the background. In reality, carbon monoxide and water are also produced. By way of further example, in an exemplary gasoline reformation process, steam, air and gasoline are reacted in a fuel processor which comprises a reactor 14 which has two sections. One section of the reactor 14 is primarily a partial oxidation reactor (POX) and the other section of the reactor is primarily a steam reformer (SR). As in the case of methanol reformation, gasoline reformation produces the desired hydrogen but, in addition, produces carbon dioxide, water and carbon monoxide. Therefore, after each type of reformation, it is desirable to reduce the carbon monoxide content of the product stream.

Accordingly, the fuel processor typically also includes one or more downstream reactors 16, such as water/gas shift (WGS) and preferential oxidizer (PROX) reactors which are used to produced carbon dioxide from carbon monoxide, as described earlier in the background. Preferably, the initial reformate output gas stream which comprises hydrogen, carbon dioxide, carbon monoxide and water is further treated in a preferential oxidation (PROX) reactor 16 to reduce the CO-levels therein to acceptable levels, for example, below 20 ppm. The H₂ rich reformate 20 is then fed through valve 31 into the anode chamber of a fuel cell 22. At the same time, oxygen (e.g., air) from an oxidant stream 24 is fed into the cathode chamber of the fuel cell 22. The hydrogen from the reformate stream 20 and the oxygen from the oxidant stream 24 react in the fuel cell 22 to produce electricity.

Exhaust or effluent 26 from the anode side of the fuel cell 22 contains some unreacted hydrogen. The exhaust or effluent 28 from the cathode side of the fuel cell 22 contains some unreacted oxygen. Air for the oxidant stream 24 is provided by an air supply, preferably compressor 30. Air from the air supply (compressor 30)is directed to the fuel cell 22 by a valve 32 under normal operating conditions. During start-up, however, the valve 32 is actuated to provide air to the input of a combustor 34. The air is used in combustor 34 to react with a fuel supplied through line 46. The heat of combustion is used to heat various parts of the fuel processor 2.

It should be noted that some of the reactions which occur in fuel processor 2 are endothermic and so require heat; other reactions are exothermic and require removal of heat. Typically, the PROX reactor 16 requires removal of heat. One or more of the reformation reactions in reactor 14 are typically endothermic and require heat be added. This is typically accomplished by preheating reactants, fuel 6, steam 8, and air 9 and/or by heating selected reactors.

Heat from the combustor 34 heats selected reactors and reactor beds in the fuel processor 2 during start-up. The combustor 34 achieves heating of the selected reactors and beds in the fuel processor, as necessary, by indirect heat transfer thereto. Typically, such indirectly heated reactors comprise a reaction chamber with inlet and an outlet. Within the reaction chamber, the beds are in the form of carrier member substrates each having a first surface carrying catalytically active material for accomplishing the desired chemical reactions. A second surface opposite the first surface is for heat transfer from hot gases to the carrier member substrates. In addition, the combustor 34 is usable to preheat the fuel 6, water 8 and air 9 being supplied as reactants to the fuel processor 2.

It should be noted that the air 9 supplied to the fuel processor 2 may be used in one or more of the reactors 12. If reactor 14 is a gasoline reformation reactor, then air from line 9 is supplied to reactor 14. The PROX reactor 16 also utilizes air to oxidize CO to CO₂ and also receives air from air supply source (compressor 30) via line 9.

The combustor 34 defines a chamber 41 with an inlet end 42, an exhaust end 44 and a catalyst section 48 between the ends. Hydrocarbon fuel is injected into the combustor. The hydrocarbon fuel, if in liquid form, is preferably vaporized either before being injected into the combustor or in a section of the combustor to disperse the fuel for combustion. Vaporization may be done by an electric heater. Once the system is operating and the combustor has heated up, vaporization may occur by heat exchange using heat from the combustor exhaust to vaporize incoming fuel. Preferably, a fuel metering device 43 is provided to control the rate at which hydrocarbon fuel is provided to the combustor.

The hydrocarbon fuel 46 and the anode effluent 26 are reacted in the catalyst section 48 of the combustor 34, which section is between the inlet and exhaust ends 42 and 44, respectively, of the combustor 34. Oxygen is provided to the combustor 34 either from the air supply (i.e., compressor 30) via valve 32 or from a second air flow stream, such as a cathode effluent stream 28, depending on system operating conditions. A valve 50 permits dumping of the combustor exhaust 36 to atmosphere when it is not needed to heat reactors in the fuel processor 2.

As can be seen, the hydrocarbon fuel stream 46 supplements the anode effluent 26 fuel for the combustor 34, as may be needed, to meet the transient and steady state needs of the fuel cell apparatus. In some situations, exhaust gas passes through a regulator 38, a shutoff valve 140 and a muffler 142 before being released to the atmosphere. In Fig. 1, the symbols are as follows: V is a valve, MFM is a mass flow meter, T is a temperature monitor, R is a regulator, C is the cathode side of the fuel cell, A is the anode side of fuel cell, INJ is an injector, and COMP is a compressor.

The amount of heat demanded by the selected reactors with the fuel processor 2, which is to be supplied by the combustor 34, is dependent upon the amount of fuel and water input and ultimately the desired reaction temperature in the fuel processor 2. As stated earlier, sometimes air is also used in the reformation reactor and must also be considered along with the fuel and water input. To supply the heat demand of the fuel processor 2, the combustor 34 utilizes all anode exhaust or effluent and potentially some hydrocarbon fuel. Enthalpy equations are used to determine the amount of cathode exhaust air to be supplied to the combustor 34 to meet the desired temperature requirements of the combustor 34 and ultimately to satisfy the fuel processor 2. The oxygen or air provided to the combustor 34 includes one or-both of cathode effluent exhaust 28, which is typically a percentage of the total oxygen supplied to the cathode of the fuel cell 22, and a compressor output air stream depending on whether the apparatus is operating in a start-up mode wherein the compressor air stream is exclusively employed, or in a run mode using the cathode effluent 28 and/or compressor air. In the run mode, any total air, oxygen or diluent demand required by the combustor 34, which is not met by the cathode effluent 28, is supplied by the compressor 30 in an amount to satisfy the heat and temperature demanded by the combustor 34 and the fuel processor 2. The air control is implemented via an air dilution valve 47 which preferably is a stepper motor driven valve having a variable orifice to control the amount of bleed-off of cathode exhaust 28 supplied to the combustor 34.

In this exemplary representation of a fuel cell apparatus, operation is as follows. At the beginning of operations when the fuel cell apparatus is cold and starting up: (1) the compressor 30 is driven by an electric motor energized from an external source (e.g., a battery) to provide the necessary system air; (2) air is introduced into the combustor 34; hydrocarbon fuel 46 (e.g., MeOH or gasoline) is injected into the combustor 34; (3) the air and fuel react in the combustor 34, where substantially complete combustion of the fuel is effected; and (4) the hot exhaust gases exiting the combustor 34 are conveyed to the selected reactors 12 associated with the fuel processor 2.

Once the reactors in the fuel processor 2 have attained adequate temperature, the reformation process begins and: (1) valve 32 is activated to direct air to the cathode side of the fuel cell 22; (2) fuel and water are fed to the fuel processor 2 to commence the reformation reaction; (3) reformate exiting the fuel processor 2 is fed to the anode side of the fuel cell 22; (4) anode effluent 26 from the fuel cell 22 is directed into the combustor 34; (5) cathode effluent 28 from the fuel cell 22 is directed into the combustor 34; (6) the fuel, air, cathode effluent 28 and anode effluent 26 are burned in the combustor 34.

Under certain conditions, the combustor 34 could operate solely on the anode and cathode effluents, without the need for additional hydrocarbon fuel 46. Under such conditions, fuel injection to the combustor 34 is discontinued. Under other conditions, e.g., increasing power demands, supplemental fuel 46 is provided to the combustor 34. It can be seen that the combustor 34 receives multiple fuels, such as a hydrocarbon fuel as well as anode effluent 26 from the anode of the fuel cell 22. Oxygen depleted exhaust air 28 from the cathode of the fuel cell 22 and air from the compressor 30 are also supplied to the combustor 34.

According to the present fuel cell system example, a controller 150 shown in Fig. 1 controls various aspects of the operation of the system shown in Fig. 1. The controller 150 may comprise any suitable microprocessor, microcontroller, personal computer, etc., which has a central processing unit capable of executing a control program and data stored in a memory. The controller 150 may be a dedicated controller specific to any of the components in Fig. 1, or implemented in software stored in the main vehicle electronic control module. Further, although software based control programs are usable for controlling system components in various modes of operation as described above, it will also be understood that the control can also be implemented in part or whole by dedicated electronic circuitry.

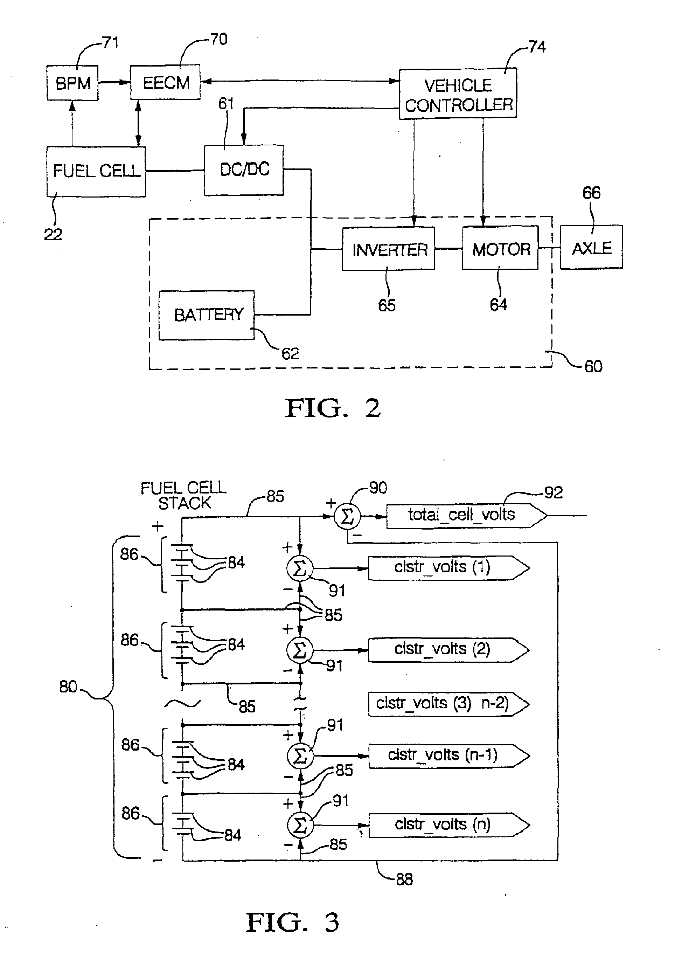

In a preferred embodiment, the fuel cell system comprises the fuel cell 22 as part of a vehicle propulsion system 60 (see Fig. 2). Here, a portion of an external circuit, comprises a battery 62, an electric motor 64, and associated drive electronics, not shown, constructed and arranged to accept electric energy from a DC/DC converter 61 associated with the fuel cell system, and, particularly, fuel cell 22, and to convert it to mechanical energy produced by the motor 64. The battery 62 is constructed and arranged to accept and store electrical energy supplied by fuel cell 22 and to accept and store electrical energy supplied by motor 64 during regenerative breaking, and to provide electric energy to motor 64. The motor 64 is coupled to driving axle 66 to rotate wheels of a vehicle (not shown). An electrochemical engine control module (EECM) 70 and a battery pack module (BPM) 71 monitor various operating parameters, including, but not limited to, the voltage and current of the stack. For example, by the battery pack module (BPM) 71, or by the BPM 71 and the EECM 70 together, send an output signal (message) to the vehicle controller 74 based on conditions monitored by the BPM 71. The vehicle controller 74 controls the electric motor 64, the drive electronics, not shown, the DC/DC converter 61, and the inverter 65, and requests an electrical power level from the EECM 70.

The term "fuel cell" is also used to refer to a fuel cell stack which contains many individual fuel cells as further illustrated in Fig. 3. Thus, fuel cell 22 of Fig. 1 in a typical arrangement consists of many cells 84 in a stack 80. The fuel cell stack 80 consists of a plurality of cells 84, often on the order of one hundred or more, connected in series. Each cell 84 within the stack 80 comprises the membrane electrode assembly described earlier, and each such cell 84 provides its increment of voltage.

A group of cells 84 within the stack 80 is referred to as a "cluster" 86, with the stack 80 being formed of a plurality of clusters 86, usually formed of an identical number of cells 84. If the total number of cells 84 in the stack 80 are not evenly divisible by the number of cells 84 in each cluster 86, the end cluster 86 will have a lower number of cells 84. For example, a stack with 200 cells may have clusters of three cells each. 66 clusters will have three cells and the 67^{th} cluster will have only two. To make all the clusters 86 appear to have the same nominal voltage, the last cluster 86 must be "padded" with a multiplier. In the previous example, the 67^{th} cluster voltage is multiplied by 1.5 to make it appear to have three cells instead of two. Typically, the number of cells 84 per cluster 86 is on the order of three or four cells 84. Three cells 84 in each cluster 86 are shown and described by way of example only. Other numbers of cells 84 could also be selected to form a plurality of like clusters 86.

In Fig. 3, each of the clusters 86 of individual cells 84 are able to be monitored individually and essentially simultaneously by means of conductors 85 which connect a positive electrode and a negative electrode of each cluster 86 to a summing node or voltage measurement device denoted by reference number 91. The summing node or device 91 provides a cumulative voltage for the series connected cells 84 in the respective cluster 86. The output of each summing node 91 (clstr_volts(1), clstr_volts(2), etc.) is directed to a monitoring circuit as described hereafter.

A positive electrode conductor 85 from one end of the stack 80 and a negative electrode conductor 88 from the opposite end of the stack 80 are connected to a separate summing node'or junction 90 to provide a measurement of the total voltage of the stack 80 across all of the individual cells 84 in the clusters 86 which form the stack 80.

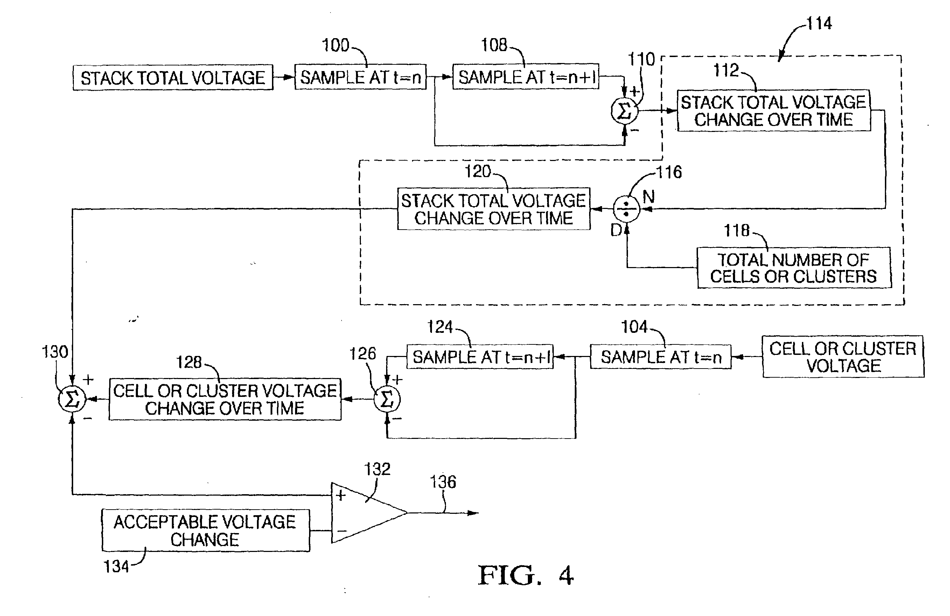

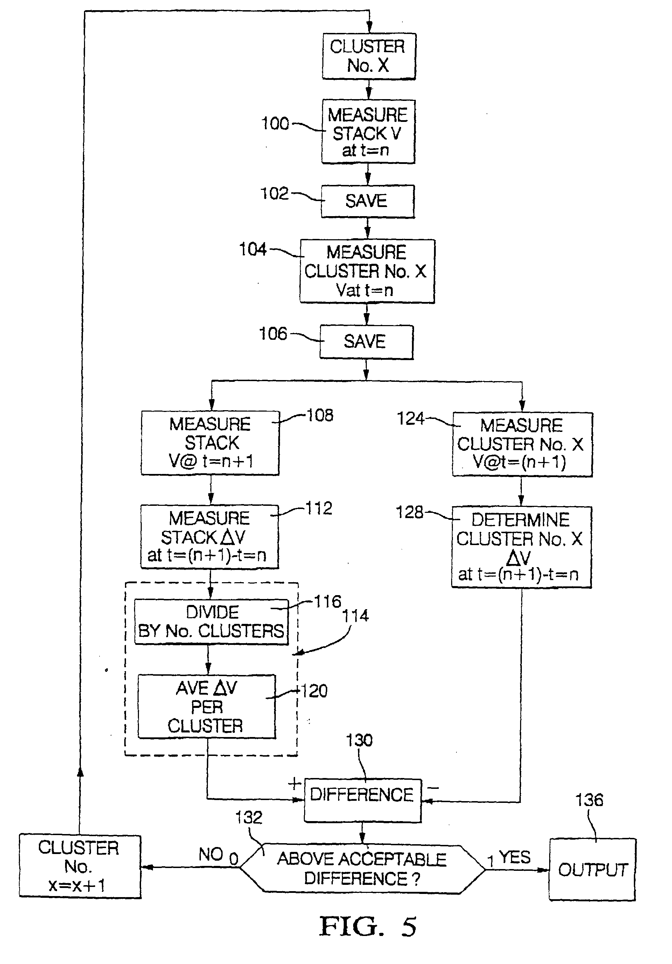

Figs. 4 and 5 depict control and flow diagrams, which may be implemented in either hardware or, preferably, software in the controller 150 or EECM 70.

Further, in the following description of the inventive method, the individual cells 84 in the fuel cell stack 80 are grouped in clusters 86 of three cells each for economies in hardware and software design. It will be understood, however, that the present inventive method is equally usable with individual cell monitoring systems wherein the voltage across each cell 84 is directly monitored. Thus, the terms "cluster" and "cell" will be understood to be interchangable in the inventive method.

According to the present method, as shown in Figs. 4 and 5, the total stack voltage, as measured at summing junction 90 at one instance of time, such as t=n, is measured or determined along with the cell or cluster voltage (hereinafter referred to only as the cluster voltage) of the first cluster 84 in the stack 80. As shown in Fig. 5, for the first cluster, the total stack voltage is measured in step 100 and saved in a memory in the controller 150 or EECM 70 in step 102. Simultaneously, the cluster voltage is measured in step 104 and also saved in the memory in step 106.

Next, the stack voltage is measured in step 108 a predetermined time after t=n or at t=n+1 in step 108, where 1 is a time increment, such as 10 milliseconds, for example. The difference or voltage change between the stack voltage at t=n and the stack voltage at t=n+1 is measured or determined in a summer 110, for example, in step 112 to determine the stack voltage change over time.

The inventive method next calculates the average cluster voltage change of all the cells 84 in the stack 80 over the time period t=n to t=n+1 in step 114. In performing this step, the stack total voltage change over time as determined in step 112 is divided in step 116 by the total number of clusters 86 in the fuel cell stack 80 using input 118. The output equals the average cluster voltage change over time (t=n+1-t=n) as shown in step 120. Simultaneously, the cluster voltage of the first cluster 86 as measured at junction 91, shown in Fig. 3 for example, and in step 104 is sampled at time t=n. The voltage of the first cluster 86 is also sampled in step 124 at time t=n+1. A voltage change in the cluster voltage is determined by subtracting the cluster voltage at time t=n from the cluster voltage at time t=n+1. The result or output in step 128 is the cluster voltage change over time in step 128.

The cluster voltage change over time from step 120 is subtracted in step 130 from the average cluster voltage change over time value from step 128 to provide a difference value between the average cluster voltage change over time for each cell 84 in the stack 80 and the voltage change of the particular cluster being examined, such as cluster number one in the above example. This difference value is compared in step 132 with an acceptable voltage difference. The output 136 of the comparator step 132, when equal to zero, indicates an acceptable voltage change difference which is indicative of no cell reversal; while a one output 136 from comparator step 132 is indicative of an unacceptable voltage change difference indicative of an impending cell reversal.

This process is then repeated for the next cluster, such as cluster number two, in the stack 80. For the next cluster, and each succeeding cluster, the stack voltage is measured at the particular time increments t=n and t=n+1 for each succeeding cluster 86 whose voltage is also measured at the same time increments. This provides an ongoing comparison between voltage changes in all of the cells or clusters of the stack and an individual cell or cluster.

It should also be understood that the above process of measuring the stack voltage and a particular cluster or cell voltage at time t=n and then re-measuring the stack voltage and cluster or cell voltage at time t=n+1 before proceeding with the determination of the average cluster voltage change over time and the individual cluster voltage change over time can be modified such that the stack voltage at time t=n and the individual cluster voltage at the same time t=n are measured and stored, as shown in steps 100-106, successively for all of the individual clusters 86 in the stack 80. The controller then re-measures the stack voltage and individual cluster or cell voltages at time t=n+1 for each successive cell or cluster before proceeding with the determination of the average cluster voltage change over time and the individual cluster voltage change over time as described above.

The time increment between time t=n and t=n+1 for successive readings of each individual cell or cluster may be any appropriate time, with shorter time increments being preferred. A time increment of 10 milliseconds is used by example only.

An example will illustrate the advantages of the present inventive method. Assuming that the stack 80 includes 200 individual cells 84 arranged in 50 clusters 86, each containing four cells 84. If, cluster number one undergoes a voltage drop of 0.3 volts from 4.0 to 3.7 volts while the total stack voltage drops from 200 to 198 volts, the inventive method will sum the average cluster voltage change or drop over 50 clusters or 0.04 volts as a negative number with the 0.3 volt change in the cluster number one and generate a voltage difference of 0.26. Reference value 134 in comparator step 132 could be set, in this example, at 0.1 thereby providing a comparator 132 output of 1 indicating an impending cell reversal since the voltage change or drop in cluster number one is significantly higher than the average voltage change or drop of all of the clusters in the entire stack 80.

When the output of the comparator step 132 is indicative of a potential cell reversal, remedial action must be taken immediately in order to maintain the integrity of the fuel cell stack 80. For example, a simple alarm or indicator may be provided to the driver of the vehicle simultaneously with removing the load on the fuel cell.

It will also be understood that the present method applies equally to the measurement of voltage changes in each cell instead of each cluster.

Thus, the present diagnostic method maintains the integrity of a fuel cell by detecting the start of possible cell reversal in individual cells or clusters in the fuel cell stack and indicates or forces immediate remedial action. The present method compares a voltage change in each cell or cluster with the average voltage change of each cell cluster in the entire stack to determine if the particular cell or cluster being examined changes significantly more or less than the rest of the cells or cluster in the stack to indicate that a cell reversal is imminent.

## Claims

1. A method of operating a fuel cell apparatus wherein a fuel cell stack includes a plurality of cells, the method comprising the steps of:
(a) determining the average cell voltage change of all of the cells in the fuel cell stack over a predetermined time period;
(b) determining the voltage change of one cell over the same predetermined time period;
(c) determining the difference between (a) and (b); and
(d) comparing the difference in step (c) with a reference difference and generating an output indicating cell reversal if the determined difference exceeds the reference difference.

2. The method of claim 1 wherein the step of determining the average cell voltage change of all the cells in the fuel cell stack comprises the steps of:
sampling the stack voltage at t=n and t=n+1 times;
determining the difference between the stack voltage at time t=n and time t=n+1; and
dividing the determined difference by the total number of cells in stack.

3. The method of claim 1 wherein:
steps (a-d) are repeated for each cell in the stack.

4. A method of operating a fuel cell apparatus wherein a fuel cell stack includes a plurality of cell clusters, the method comprising the steps of:
(a) determining the average cell cluster voltage change of all of the cell clusters in the fuel cell stack over a predetermined time period;
(b) determining one cell cluster voltage change over the same predetermined time period;
(c) determining the difference between (a) and (b); and
(d) comparing the difference in step (c) with a reference difference and generating an output indicating cell reversal if the determined difference exceeds the reference difference.

5. The method of claim 4 wherein the step of determining the average cell cluster voltage change of all the cell clusters in the fuel cell stack comprises the steps of:
sampling the stack voltage at t=n and t=n+1 times;
determining the difference between the stack voltage at the time t=n and time t=n+1; and
dividing the determined difference by the total number of cell clusters in stack.

6. The method of claim 4 wherein:
steps (a-d) are repeated for each cell cluster in the stack.

7. An apparatus for detecting impending cell reversal in a fuel cell stack including a plurality of cells arranged in a stack, the apparatus comprising:
means for determining the average cell voltage change in the stack over a predetermined time period;
means for measuring the voltage change of one cell in the stack over the predetermined time period;
means for determining the difference between the voltage change of the stack and the voltage change of the one cell over the same predetermined time period; and
means for comparing the determined difference with a reference acceptable difference and generating an output if the determined difference exceeds the reference difference.

8. The apparatus of claim 7 wherein the means for determining the average cell voltage change of all of the cells in the stack comprises:
means for measuring the stack voltage at the beginning and end times of the predetermined time period;
means for determining the difference between the stack voltage at the start of the time period and the stack voltage at the end time of the time period; and
means for dividing the determined difference by the total number of cells in the stack.

9. An apparatus for detecting impending cell reversal in a fuel cell stack including a plurality of cells arranged in clusters, the apparatus comprising:
means for determining the average cluster voltage change in the stack over a predetermined time period;
means for measuring the voltage change of one cell in the cluster over the predetermined time period;
means for determining the difference between the voltage change of the cluster and the voltage change of the one cell over the same predetermined time period; and
means for comparing the determined difference with a reference acceptable difference and generating an output if the determined difference exceeds the reference difference.

10. The apparatus of claim 9 wherein the means for determining the average cluster voltage change of all of the cells in the cluster comprises:
means for measuring the stack voltage at the beginning and end times of the predetermined time period;
means for determining the difference between the stack voltage at the start of the time period and the stack voltage at the end time of the time period; and
means for dividing the determined difference by the total number of cells in the stack.
